(19) Europäisches Patentamt
European Patent Office
Office européen des brevets

(11) **EP 3 862 778 B1**

(12) **EUROPÄISCHE PATENTSCHRIFT**

(45) Veröffentlichungstag und Bekanntmachung des Hinweises auf die Patenterteilung:
**08.11.2023  Patentblatt 2023/45**

(21) Anmeldenummer: **20155890.5**

(22) Anmeldetag: **06.02.2020**

(51) Internationale Patentklassifikation (IPC):
**G01S 17/04** (2020.01)    **G01S 17/48** (2006.01)
**G01S 7/481** (2006.01)    **G01S 7/497** (2006.01)
**G01S 7/4911** (2020.01)    **G01S 7/493** (2006.01)
**G01V 8/20** (2006.01)

(52) Gemeinsame Patentklassifikation (CPC):
**G01S 7/497; G01S 7/4815; G01S 7/4911;
G01S 7/493; G01S 17/04; G01S 17/48; G01V 8/20;**
G01S 2007/4975

(54) **OPTISCHER SENSOR UND VERFAHREN ZUM BETRIEB EINES OPTISCHEN SENSORS**

OPTICAL SENSOR AND METHOD FOR OPERATING AN OPTICAL SENSOR

CAPTEUR OPTIQUE ET PROCÉDÉ DE FONCTIONNEMENT D'UN CAPTEUR OPTIQUE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**11.08.2021  Patentblatt 2021/32**

(73) Patentinhaber: **Leuze electronic GmbH + Co. KG
73277 Owen/Teck (DE)**

(72) Erfinder:
• **Mullis, Moritz
  73230 Kirchheim unter Teck (DE)**
• **Patz, Jürgen
  72660 Beuren (DE)**
• **Butzbach, Markus
  73734 Esslingen (DE)**
• **Heß, Ralf
  72639 Neuffen (DE)**
• **Sanzi, Friedrich
  73230 Kirchheim/Teck (DE)**

(74) Vertreter: **Ruckh, Rainer Gerhard
Patentanwalt
Jurastrasse 1
73087 Bad Boll (DE)**

(56) Entgegenhaltungen:
EP-A1- 2 348 331    EP-A1- 3 441 795
EP-A1- 3 572 768    DE-U1- 20 118 145

**Beschreibung**

Die Erfindung betrifft einen optischen Sensor und ein Verfahren zum Betrieb eines optischen Sensors.

Derartige optische Sensoren sind insbesondere als Triangulationstaster ausgebildet, das heißt als Lichttaster, welche nach dem Triangulationsprinzip arbeitend Distanzen von Objekten bei Objekterfassungen bestimmen können. Generell weist ein solcher optischer Sensor wenigstens einen Lichtstrahlen emittierenden Sender und einen ortsauflösenden Empfänger, der von einem PSD (position sensitive device) -Element gebildet sein kann, auf. Dabei sind der Sender und der Empfänger in Abstand zueinander angeordnet. Ein ortsauflösender Empfänger in Form eines PSD-Elements weist zwei Ausgänge auf, über welche je ein analoges Ausgangssignal ausgegeben wird. Zur Distanzbestimmung wird üblicherweise der Quotient der Differenz und der Summe der Ausgangssignale gebildet. Auf diese Weise können besonders einfach Distanzen von Objekten bestimmt werden.

Probleme bei Objektdetektionen können dann auftreten, wenn Objekte direkt vor einem Hintergrund erfasst werden müssen. Ein Beispiel hierfür ist die Erkennung von Objekten auf einem Hintergrund in Form eines Förderbands, das am optischen Sensor vorbeibewegt wird. Die Oberfläche des Förderbands weist typischerweise inhomogene optische Eigenschaften, zum Beispiel aufgrund unterschiedlichen wechselnden Farben oder Verschmutzungen auf. Die auf dem Förderband geförderten Objekte können ganz oder teilweise opak, das heißt lichtundurchlässig beziehungsweise ganz oder teilweise transparent, das heißt lichtdurchlässig sein. Weiterhin können die Objekte glänzende, spiegelnde oder diffus reflektierende Oberflächen aufweisen. Schließlich kann es an Objektoberflächen, insbesondere von teiltransparenten Objekten, wie Verpackungen, zu Mehrfachreflektionen von auftreffenden Lichtstrahlen kommen.

All diese Effekte können dazu führen, dass die Objekte vor dem Hintergrund nicht mehr sicher erkannt werden können.

Prinzipiell kann die Nachweisempfindlichkeit dadurch erhöht werden, den optischen Sensor mit mehreren Sendern, die zyklisch einzeln nacheinander aktiviert werden, auszustatten. Jeder Sender bildet dann mit dem ortsauflösenden Empfänger einen Triangulationstaster. Zur Erhöhung der Nachweisempfindlichkeit können die Messwerte der Triangulationstaster gemittelt werden. Jedoch hat es sich gezeigt, dass auch mit einem solchen optischen Sensor noch keine zufriedenstellende Ergebnisse erhalten werden.

Die DE 201 18 145 U1 betrifft einen optischen Sensor mit einem nach dem Triangulationsprinzip arbeitenden Distanzsensorelement, bestehend aus einem erste Sendelichtstrahlen emittierenden ersten Sender und einem in Abstand neben dem ersten Sender angeordneten, Empfangslichtstrahlen empfangenden, ortsauflösenden Detektor, und mit einer Auswerteeinheit zur Auswertung der am Ausgang des Empfängers anstehenden Empfangssignale. Zwischen dem ersten Sender und dem ortsauflösenden Detektor ist ein zweiter Sendelichtstrahlen emittierender zweiter Sender vorgesehen. Die beiden Sender sind alternierend aktiviert. In der Auswerteeinheit ist eine Amplitudenbewertungseinheit vorgesehen, welcher die Empfangssignale bei aktiviertem zweiten Sender zugeführt sind.

In der EP 2 348 331 A1, wird ein optoelektronischer Sensor zur Detektion von Objektkanten angegeben mit mindestens zwei Lichtsendern die eine Lichtquelle und eine Sendeoptik zur Erzeugung kollimierter Sendelichtstrahlen aufweisen, mit einem ortsauflösenden Lichtempfänger zur Aufnahme von durch die Sendelichtstrahlen auf den Objekten erzeugten Lichtflecken sowie mit einer Auswertungseinheit, die dafür ausgebildet ist, bei Erkennung einer Kante aus einer Empfangsintensität (I) der Lichtflecken und/oder aus einem mittels Triangulation aus der Lage der Lichtflecken auf dem Lichtempfänger bestimmten Abstand (d) ein Objektfeststellungssignal auszugeben. Dabei ist die Auswertungseinheit weiterhin dafür ausgebildet, jeweils die Differenz der aus zwei Lichtflecken bestimmten Empfangsintensität (I) und/ oder des aus zwei Lichtflecken bestimmten Abstands (d) zu bewerten, um eine Kante zu erkennen.

Die EP 3 572 768 A1 betrifft einen optischen Sensor mit mehreren Lichtstrahlen emittierenden Sendern, welche jeweils zyklisch einzeln aktiviert sind und mit einem ortsauflösenden Empfänger, welcher zwei Anschlüsse aufweist, über welche jeweils ein analoges Ausgangssignal ausgebbar ist. Jeder Sender bildet mit dem ortsauflösenden Empfänger einen Triangulationstaster. Eine Auswerteeinheit zur Auswertung der Ausgangssignale des ortsauflösenden Empfängers ist vorgesehen. Der optische Sensor ist zur Detektion von Objekten vor einem Hintergrund ausgebildet. In der Auswerteeinheit wird aus den Ausgangssignalen der Triangulationstaster eine Differenzsumme und eine Quotientensumme gebildet. Die Differenzsumme ist die Summe der Beträge der Differenzwerte der aktuellen Ausgangssignale und eines Mittelwerts des jeweiligen Ausgangssignals aller Triangulationstaster. Die Quotientensumme ist die Summe der Quotienten der Differenzen und Summen der Ausgangssignale aller Triangulationstaster. Die Quotientensumme und die Differenzsumme bilden die Koordinatenachsen eines zweidimensionalen Vektorraums. In einem Einlernvorgang wird der Hintergrund alleine mit dem Triangulationstaster mehrfach vermessen und für die dabei erhaltenen Messwerte durch Berechnung der Quotientensumme und Differenzsumme jeweils Messpunkte im Vektorraum erhalten und für diese eine konvexe Hülle gebildet. Während eines auf den Einlernvorgang folgenden Arbeitsbetriebs ist ein Objekt vor dem Hintergrund dadurch erkannt, dass dessen Messpunkte außerhalb der konvexen Hülle liegen.

In der EP 3 441 795 A1 wird ein Sensor zur Erfassung eines Objekts in einem Überwachungsbereich angegeben, mit mindestens einem Sensorelement zum Erfassen eines Sensorsignals, mit einem Schaltausgang zur Ausgabe eines binären Gegenstandsfeststellungssignal und mit einer Auswertungseinheit, die dafür ausgebildet ist, das Gegenstandsfeststellungssignal in Abhängigkeit von dem erfassten Objekt aus dem Sensorsignal zu erzeugen sowie in einer Einlernphase einen Schaltpunkt zu bestimmen, der die Zuordnung zwischen Sensorsignal und Gegenstandsfeststellungssignal festlegt. Die Auswertungseinheit ist weiterhin dafür ausgebildet, in der Einlernphase ein jeweiliges Sensorsignal für eine Vielzahl von Detektionssituationen zu erfassen, wobei das zugehörige Gegenstandsfeststellungssignal für die jeweilige Detektionssituation vorgegeben wird, und daraus den Schaltpunkt abzuleiten.

Der Erfindung liegt die Aufgabe zugrunde, einen optischen Sensor und ein Verfahren bereitzustellen, mittels dem eine sichere Detektion von Objekten vor einem Hintergrund ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit mehreren Lichtstrahlen emittierenden Sendern, welche jeweils zyklisch einzeln aktiviert sind und mit einem ortsauflösenden Empfänger, welcher zwei Anschlüsse aufweist, über welche jeweils ein analoges Ausgangssignal ausgebbar ist. Jeder Sender bildet mit dem ortsauflösenden Empfänger einen Triangulationstaster. Es ist eine Auswerteeinheit vorgesehen, in welcher in Abhängigkeit der Ausgangssignale des ortsauflösenden Empfängers ein Schaltsignal generiert wird, dessen Schaltzustände angeben, ob ein Objekt vor einem Hintergrund vorhanden ist oder nicht, die Sender sind entlang einer parallel zur Längsachse des ortsauflösenden Empfängers verlaufenden Geraden angeordnet. Die Ausgangssignale des ortsauflösenden Empfängers sind über wenigstens einen Analog-Digital-Wandler der Auswerteeinheit zugeführt. Für den Fall, dass beide Ausgangssignale innerhalb vorgegebener Grenzen einem Signaloffset des Analog-Digital-Wandlers entsprechen, nimmt das Schaltsignal den ein Objekt signalisierenden Schaltzustand ein. Der Signaloffset wird vor jeder Messung bestimmt.

Die Erfindung betrifft weiterhin ein Verfahren zum Betrieb eines optischen Sensors.

Die zyklisch einzeln aktivierten Sender, die vorteilhaft Lichtstrahlen in Form von Sendelichtimpulsen emittieren, bilden jeweils mit dem ortsauflösenden Empfänger einen Triangulationstaster. Mit dem so ausgebildeten optischen Sensor können Objekte vor einem Hintergrund hochgenau und reproduzierbar erfasst werden, und zwar auch für inhomogene, gegebenenfalls variierende Oberflächeneigenschaften des Hintergrunds und auch für unterschiedliche Objektbeschaffenheiten. Insbesondere können mit dem erfindungsgemäßen optischen Sensor ganz oder teilweise opake beziehungsweise transparente Objekte erfasst werden. Dabei können generell Objekte erfasst werden, unabhängig davon, ob sie diffus reflektierende, spiegelnde oder glänzende Oberflächen aufweisen.

Besonders vorteilhaft werden mit diesem Verfahren Objekte detektiert, die auf einem Förderband gefördert werden, wobei das Förderband den Hintergrund bildet.

Die Lichtstrahlen der Sender treffen dann auf die gleiche Position des in Förderrichtung geförderten Objekts.

Mit der erfindungsgemäßen Senderanordnung auf einer Geraden parallel zur Längsachse des ortsauflösenden Empfängers, der insbesondere in Form eines PSD-Elements ausgebildet ist, kann auf überraschend einfache Weise die Nachweissicherheit des optischen Sensors, insbesondere bei der Detektion glänzender, das heißt stark und gerichtet lichtreflektierender Objekte erheblich erhöht werden.

Bei der Detektion hochglänzender Objekte besteht eine Fehlerquelle darin, dass die Lichtstrahlen von diesen auf den Hintergrund, insbesondere das Förderband, treffen und von dort über weitere Gegenstände zum ortsauflösenden Empfänger des optischen Sensors reflektiert werden, was zur Verfälschung der ermittelten Distanzwerte führen kann. Derartige Mehrfachreflexionen werden mit der erfindungsgemäßen Senderanordnung vermieden.

Gemäß einer vorteilhaften Ausführungsform ist den Sendern eine Blende in Form einer Feldblende oder einer Kombination einer Feld- und Aperturblende zugeordnet.

Damit können Streulichteffekte, die zu Fehldetektionen führen würden, effizient vermieden werden.

Weiter vorteilhaft nimmt das Schaltsignal nur dann den ein Objekt signalisierenden Schaltzustand ein, wenn die hierzu ermittelten Abstände kleiner sind als ein für den Hintergrund vorgegebener Abstandswert.

Durch diese vorzeichenabhängige Auswertung wird eine höhere Nachweissicherheit erhalten als bei einer Berücksichtigung des Betrags des ermittelten Abstands.

Erfindungsgemäß sind die Ausgangssignale des ortsauflösenden Empfängers über wenigstens einen Analog-Digital-Wandler der Auswerteeinheit zugeführt. Für den Fall, dass beide Ausgangssignale innerhalb vorgegebener Grenzen dem Signaloffset des Analog-Digital-Wandlers entsprechen, nimmt das Schaltsignal den ein Objekt signalisierenden Schaltzustand ein.

Damit kann eine Gefahr von Fehldetektionen dadurch, dass die Lichtstrahlen der Sender an einem Objekt weggespiegelt werden, und damit kein Licht mehr auf den ortsauflösenden Empfänger trifft, reduziert werden. In diesem Fall werden am ortsauflösenden Empfänger etwa gleich große Ausgangssignale erhalten, die durch den Arbeitspunkt und ein Rauschen des ortsauflösenden Empfängers bedingt sind und dem Signaloffset des Analog-Digital-Wandlers entsprechen. Da in diesem Fall der Schaltzustand des Schaltsignals des optischen Sensors unbestimmt ist, wird dieser, wenn die Ausgangssignale den Signaloffsets entsprechen, auf den einer Objektdetektion entsprechenden Schaltzustand gesetzt. Damit werden plötzliche, durch Wegspiegelungseffekte bedingte unreproduzierbare Schaltzustandsänderungen vermieden.

Weiterhin wird der Signaloffset vor jeder Messung bestimmt, kurz bevor der Sendeimpuls ausgesendet wird.

Damit erfolgt eine selbsttätige Anpassung des Signaloffsets während des gesamten Betriebs des optischen Sensors, was zu einer erhöhten Zuverlässigkeit bei den Objektdetektionen führt.

Gemäß einer vorteilhaften Ausgestaltung werden zur Generierung des Schaltsignals rollierend die mit den Sendern generierten Ausgangssignale herangezogen. Dabei können auch Sender mehrfach herangezogen werden.

Mit dieser rollierenden Auswertung der Sender zur Generierung von Schaltsignalen kann die Zuverlässigkeit der Objektdetektion weiter erhöht werden, da hierzu eine größere Anzahl von Ausgangssignalen als die Anzahl der vorhandenen Sender herangezogen wird.

Besonders vorteilhaft werden zur Generierung des Schaltsignals die Ausgangssignale mit mehreren eine Schalthysterese bildenden Distanz-Schaltschwellenwerten bewertet.

Durch diese Schalthysterese wird eine erhöhte Zuverlässigkeit des Umschaltens in die jeweiligen Schaltzustände erhalten, wodurch sich insgesamt eine höhere Detektionssicherheit ergibt.

Besonders vorteilhaft wird die Schalthysterese abhängig von Energieabweichungen der Ausgangssignale verändert.

Weiter vorteilhaft kann eine Schalthysterese für Distanzwerte und Energieabweichungen vorgesehen sein.

Die Energieabweichungen sind ein Maß für die auf den ortsauflösenden Empfänger auftreffende Lichtenergie und damit die Empfangsleistung des ortsauflösenden Empfängers. Das Rauschen der Ausgangssignale des ortsauflösenden Empfängers wirkt sich auf die Berechnung der Distanzabweichung aus. Je kleiner das Signal-Rausch-Verhältnis, desto mehr rauscht das Signal der Distanzabweichung. Diesem Effekt kann durch die energieabhängige Variation der Schalthysterese Rechnung getragen werden.

Zusätzlich kann eine Nachführung der Sendeleistungen der Sender derart vorgesehen sein, dass keine Sättigung der Ausgangssignale auftritt. Auch kann das Empfangssignal und damit das Signal-Rausch-Verhältnis konstant gehalten werden, wenn zum Beispiel durch eine Verschmutzung auf dem Förderband weniger Licht remittiert wird, insbesondere durch eine Erhöhung der Sendeleistung.

Dadurch werden Fehldetektionen aufgrund einer Sättigung oder zu schwachem Pegel des Ausgangssignals des ortsauflösenden Empfängers vermieden.

Gemäß einer ersten Variante der Erfindung werden in der Auswerteeinheit in einem Einlernvorgang zum Einlernen des Hintergrunds in einem ersten Schritt die Sendeleistungen der Sender in den jeweils optimalen Arbeitspunkt gebracht. Die Arbeitspunkte sind so gewählt, dass die Summen der beiden Ausgangssignale jedes Triangulationstasters möglichst auf der halben Amplitude des Aussteuerbereichs der Analog-Digital-Wandler zu liegen kommen.

Sind im Einlernvorgang die Arbeitspunkte der Sender festgelegt, werden im weiteren Verlauf des Einlernvorgangs aus den Ausgangssignalen der Triangulationstaster Energiewerte und Distanzquotienten abgeleitet, die Referenzwerte bilden. Die Energiewerte entsprechen den beiden Ausgangssignalen des ortsauflösenden Empfängers. Die Distanzquotienten werden definiert durch Quotienten der Differenzen und Summen der beiden Ausgangssignale des ortsauflösenden Empfängers. Ein Sender generiert somit drei Referenzwerte: zwei Energiewerte (gemessene Werte des Analog-Digital-Wandlers als Ausgangssignale) und einen berechneten Distanzquotienten.

In der nächsten Phase des Einlernvorgangs werden pro Sender X mal die drei Referenzwerte aufgezeichnet. Gleichzeitig werden die drei Referenzwerte einzeln pro Sender aufsummiert und am Ende einzeln durch X geteilt, um pro Sender für jeden der drei Referenzwerte den Mittelwert zu erhalten.

Anschließend werden die aufgezeichneten Referenzwerte mit den Mittelwerten der Referenzwerte verglichen. Beim Vergleichen werden die Beträge der Abweichungen bestimmt. Die Beträge der Energieabweichungen pro Sender werden aufsummiert (aus zwei Abweichungen pro Sender wird eine kombinierte). Die Abweichungen der Distanzquotienten bleiben in diesem Schritt noch unberücksichtigt.

Nun werden die pro Sender kombinierten Energieabweichungen sowie die Distanzquotientenabweichungen über mehrere Sender für mehrere Sendezyklen aufsummiert. Es bildet sich je eine Summe der Energieabweichungen und eine Summe der Distanzquotientenabweichungen. Diese beiden Summen werden in einen Vektorraum, aufgespannt durch die Energie- und Distanzabweichung, eingetragen.

Sind alle Punkte eingetragen, kann eine konvexe Hülle bestimmt werden.

Im Arbeitsbetrieb erfolgt die Bestimmung der Energie- und Distanzabweichung analog zum Einlernvorgang.

Aus den Ausgangssignalen der Triangulationstaster werden Energiewerte und Distanzquotienten abgeleitet. Die Energiewerte entsprechen den beiden Ausgangssignalen des ortsauflösenden Empfängers. Die Distanzquotienten werden definiert durch Quotienten der Differenzen und Summen der beiden Ausgangssignale des ortsauflösenden Empfängers. Die gemessenen Werte werden mit den Mittelwerten der Referenzwerte verglichen, die beim Einlernvorgang bestimmt wurden. Beim Vergleichen werden die Beträge der Abweichung bestimmt. Die Beträge der Energieabweichungen pro Sender werden aufsummiert. Die Abweichung beim Distanzquotienten sind an diesem Schritt noch unberücksichtigt.

Dann werden die pro Sender kombinierten Energieabweichungen sowie die Distanzquotientenabweichungen über mehrere Sender für mehrere Sendezyklen (gleiche Anzahl wie beim Einlernvorgang) aufsummiert. Es bildet sich je eine Summe der Energieabweichungen und eine Summe der Distanzquotientenabweichungen. Diese beiden Summen werden in den bereits aufgespannten Vektorraum eingetragen.

Liegen nun die Punkte innerhalb der beim Einlernvorgang bestimmten konvexen Hülle, so zeigt der Schaltausgang den Zustand "Hintergrund erkannt" an, andernfalls wechselt der Schaltausgang in den Zustand "Objekt erkannt".

Wesentlich hierbei ist, dass in einem Einlernvorgang mit den Triangulationstastern allein der Hintergrund, also ohne Objekte, detektiert wird. Für die dabei erhaltenen Ausgangssignale des ortsauflösenden Empfängers werden die Summen der Energieabweichungen und Distanzquotienten ermittelt, welche dann einzelne Messpunkte in dem genannten zweidimensionalen Vektorraum bilden.

Für diese Messpunkte im zweidimensionalen Raum wird erfindungsgemäß die konvexe Hülle gebildet. Generell ist die konvexe Hülle einer Teilmenge X eines reellen oder komplexen Vektorraums definiert als der Schnitt aller konvexen Obermengen von X. Sie ist selbst konvex und damit die kleinste konvexe Menge, die X enthält. Die Bildung der konvexen Hülle ist ein Hüllenoperator.

Durch die Gruppierung von Messpunkten in dem von den Summen der Energieabweichungen und Distanzquotienten aufgespannten zweidimensionalen Vektorraum und durch die Bildung der konvexen Hülle für die allein vom Hintergrund stammenden Messpunkte, können überraschend sicher und reproduzierbar Objekte vom Hintergrund unterschieden werden, da nämlich die von Objekten stammenden Messpunkte außerhalb der konvexen Hülle liegen.

Besonders vorteilhaft wird die konvexe Hülle als Parameterwert vorgegeben.

Insbesondere weist die konvexe Hülle eine Rechteckform auf.

Die Vorgabe der Hülle ist somit schnell und einfach durchführbar.

Alternativ wird während des Einlernvorgangs mit zunehmender Anzahl von Messpunkten die konvexe Hülle iterativ bestimmt.

Je mehr Messpunkte zur konvexen Hülle beitragen, desto sicherer kann dann im auf den Einlernvorgang folgenden Arbeitsbetrieb ein Objekt von dem Hintergrund unterschieden werden.

Die Unterscheidung zwischen Objekt und Hintergrund kann besonders vorteilhaft dadurch noch verbessert werden, dass durch Streckung der konvexen Hülle mit einem ersten Streckungsfaktor eine Ausschalthülle gebildet ist, und dass durch Streckung der konvexen Hülle mit einem zweiten Streckungsfaktor, der größer ist als der erste Streckungsfaktor, eine Einschalthülle gebildet ist.

Die Ein- und Ausschalthülle bildet somit die Schalthysterese.

Vorteilhaft sind die Streckungsfaktoren als Parameterwerte vorgegeben.

Gemäß einer weiteren Variante der Erfindung erfolgt die Auswertung der Ausgangssignale des ortsauflösenden Empfängers mittels eines neuronalen Netzes.

Durch ein geeignetes Training des neuronalen Netzes können verschiedene Szenarien nachgebildet werden, wodurch eine gute applikationsspezifische Anpassung der Auswertung der Ausgangssignale des ortsauflösenden Empfängers gegeben ist.

Die Erfindung wird im Folgenden anhand der Zeichnungen erläutert. Es zeigen:

Figur 1: Blockschaltbild eines Ausführungsbeispiels des erfindungsgemäßen optischen Sensors.

Figur 2: Sender-/Empfängeranordnung des optischen Sensors gemäß Figur 1 in einer Draufsicht.

Figur 3: Beispiel einer konvexen Hülle für den optischen Sensor gemäß Figur 1.

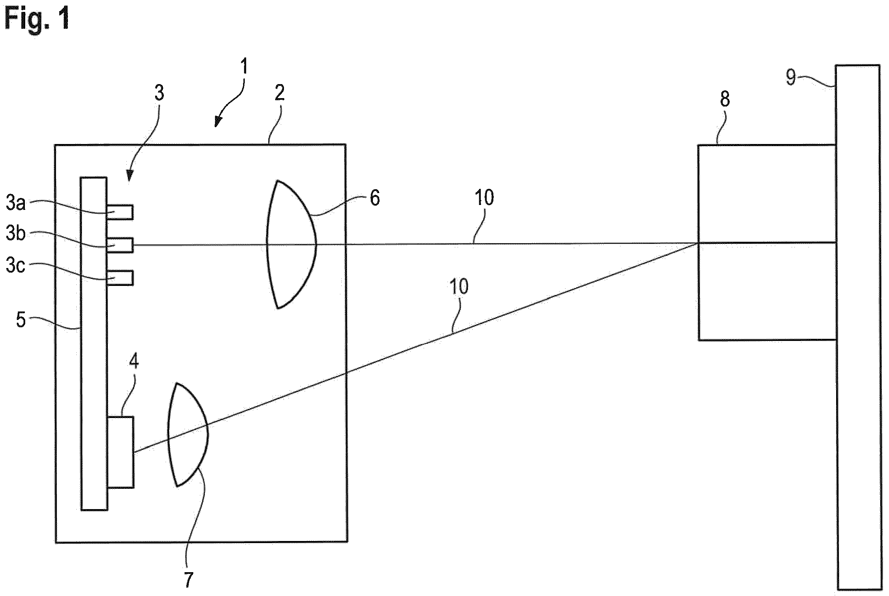

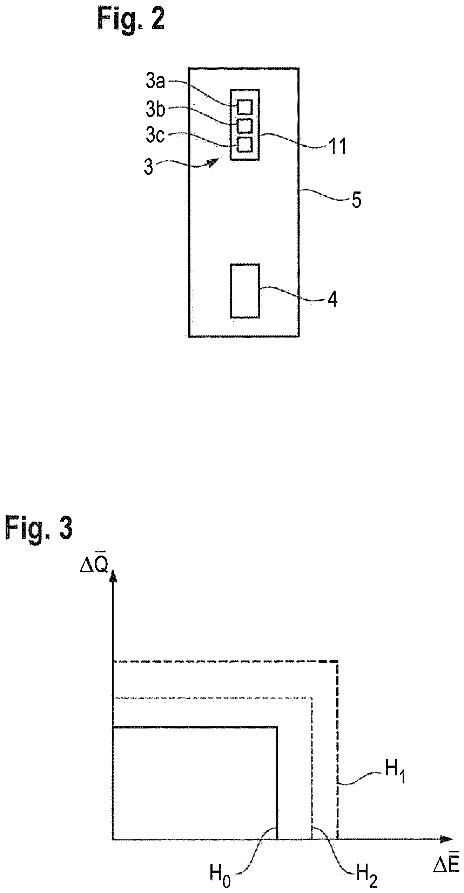

Die Figuren 1 und 2 zeigen den Aufbau eines Ausführungsbeispiels des erfindungsgemäßen optischen Sensors 1. Die Komponenten des optischen Sensors 1 sind in einem Gehäuse 2 integriert. Der optische Sensor 1 umfasst eine Sendereinheit 3 mit drei Sendern 3a bis 3c in Form von Leuchtdioden und einen ortsauflösenden Empfänger 4 in Form eines PSD-Elements, welches in bekannter Weise an jedem längsseitigen Ende einen Anschluss zur Ausgabe eines analogen Ausgangssignals aufweist. Natürlich kann auch eine andere Zahl N > 1 von Sendern 3a bis 3c vorgesehen sein. Die Sender 3a bis 3c liegen dicht nebeneinander auf einer Geraden, die parallel, insbesondere entlang zur Längsachse des PSD-Elements verläuft, in Abstand zum PSD-Element. Damit bildet jeder Sender 3a bis 3c mit dem PSD-Element einen Triangulationstaster.

Die Sender 3a bis 3c und der ortsauflösende Empfänger 4 sind auf einer Leiterplatte 5 angeordnet, auf welcher auch eine Auswerteeinheit und zwei Analog-Digital-Wandler angeordnet sind (in Figur 1 nicht dargestellt). Vom PSD-Element generierte analoge Ausgangssignale werden (nach dem Verstärken) in den Analog-Digital-Wandlern digitalisiert und in die Auswerteeinheit, die von einem Mikroprozessor oder dergleichen gebildet sein kann, eingelesen. In der Auswerteeinheit erfolgt dann eine Auswertung der digitalisierten Ausgangssignale zur Durchführung von Objekterkennungen. Weiterhin erfolgt mit der Auswerteeinheit eine Ansteuerung der Sender 3a bis 3c derart, dass diese einzeln nacheinander zyklisch aktiviert werden.

Wie aus Figur 1 ersichtlich, ist der Senderanordnung eine Sendeoptik 6 zugeordnet. Weiterhin ist dem ortsauflösenden Empfänger 4 eine Empfangsoptik 7 zugeordnet. Mit dem Sensor 1 wird im dargestellten Fall ein Objekt 8

detektiert, das auf einen einen Hintergrund bildenden Förderband 9 angeordnet ist. Ist auf dem Förderband 9 kein Objekt 8 angeordnet, wird das Förderband 9 detektiert.

Wie Figur 1 zeigt, werden von der Sendereinheit 3 emittierte Lichtstrahlen 10 durch die Sendeoptik 6 geführt, gelangen zum Objekt 8, werden dann an diesem reflektiert und gelangen dann über die Empfangsoptik 7 zum ortsauflösenden Empfänger 4. Entsprechend dem Auftreffpunkt der Lichtstrahlen 10 auf dem PSD-Element, werden bestimmte Ausgangssignale an dessen Anschlüssen erhalten, die in der Auswerteeinheit als Maß für die Objektdistanz ausgewertet werden.

Die Sender 3a bis 3c, die Licht gleicher oder unterschiedlicher Wellenlängen emittieren können, werden im Pulsbetrieb betrieben, sodass diese Lichtstrahlen 10 in Form von Sendelichtimpulsen emittieren. Ist ein Sender für ein Zeitintervall aktiviert, kann dieser einen einzelnen Sendelichtimpuls oder eine Folge von Sendelichtimpulsen emittieren.

Durch die zyklische Einzelaktivierung wird das Objekt 8 mit den Sendelichtimpulsen aller Sender 3a bis 3c detektiert, sodass Distanzinformationen für alle drei Triangulationstaster für eine Objektdetektion zur Verfügung stehen.

Für eine Streulichtunterdrückung ist den Sendern mindestens eine Feldblende zugeordnet.

Nachfolgend wird eine erste Variante der erfindungsgemäßen Signalauswertung erläutert.

Für diese Signalauswertung werden Vektoren $x_{LEDi}$ wie folgt definiert:

$$x_{LEDi} = \begin{bmatrix} ADC1 \\ ADC2 \end{bmatrix} \text{mit } i = 1 \ldots 3$$

Dabei sind ADC1, ADC2 die Ausgangssignale des ortsauflösenden Empfängers 4, die über den Analog-Digital-Wandler der Auswerteeinheit zugeführt sind.

Während eines Einlernvorgangs, der vor dem Arbeitsbetrieb des optischen Sensors 1 durchgeführt wird, wird zuerst der Signaloffset bestimmt. Dabei werden die Sender 3a bis 3c mit dem Sendestrom 0 angesteuert. Es wird kein Licht ausgesendet. Die Rohmesspunkte bilden folglich die Ruhelage des Eingangssignals ab, welche den Signaloffset $x_{LEDi.offset}$ bilden.

Es werden in diesem Arbeitspunkt n Rohmesspunkte für die drei Sender 3a bis 3c aufgenommen: $x_{LEDi.j.offset}$ mit $j = 1 \ldots n$.

Von diesen n Rohmesspunkten wird dann der Mittelwert gebildet:

$$\bar{x}_{LEDi.offset} = \frac{1}{n} \sum_{j=1}^{n} x_{LEDi.j.offset}$$

Diese Mittelwertbildung ist optional und kann auch dahingehend ausgelassen werden, dass dann $x_{LEDi.offset} = x_{LEDi.offset}$ ist, also keine Mitteilung erfolgt. Es müssen dann auch nicht n Rohmesspunkte erfasst werden. $x_{LEDi.offset}$ wird dann vor jedem Aussenden eines Lichtpulses neu bestimmt.

Anschließend wird während des Einlernvorgangs der Sendestrom der Sender 3a bis 3c so eingestellt, dass die Summe der Elemente von $x_{LEDi}$ ca. 4095 LSB (maximaler Aussteuerbereich der Analog-Digital-Wandler) entspricht. Der Sendestrom wird nun auch im weiteren Betrieb nicht mehr verändert. Dies gilt jedoch nicht für den Betriebsmodus "Tracking".

Beim Tracking werden, wenn kein Objekt vorhanden ist (aktueller Messpunkt ($\Delta E_{LEDi.t}$/$\Delta Q_{LEDi.t}$) innerhalb Ausschalthülle) die Summe der Elemente von $y_{LEDi}$ über einen längeren Zeitraum aufsummiert (für jeden Sender einzeln, das heißt drei Summen) und anschließend gemittelt (wieder einzeln, drei Mittelwerte). Weichen diese gemittelten Wert von $\bar{y}_{LEDi.teach}$ ab, wird die Sendeleistung entsprechend nachgeregelt. Dies für den Fall, dass zum Beispiel bei steigender Temperatur die Sendeleistung erhöht werden muss, damit wieder gleich viel Licht ausgesendet wird wie beim Teach mit niedrigerer Temperatur.

Der Distance-Only-Modus funktioniert ähnlich, nur dass dort die Sendeleistung immer gleich nachgeregelt wird. Das heißt es findet kein Aufsummieren und Mitteln statt. Hier ist nur noch 1-Dimensionale Auswertung möglich, da die Energieabweichung immer zu 0 ausgeregelt wird. Es ist nur noch eine Objektdetektion über Distanzabweichung möglich. Vorteil: Stark verschmutzte Bänder führen nicht zu Fehlschalten.

Es werden nun in diesem Arbeitspunkt m Messpunkte $y_{LEDi}$ für jeden der drei Sender 3a bis 3c aufgenommen: $y_{LEDi.j} = x_{LEDi.j} - \bar{x}_{LEDi.offset}$ mit $j = 1 \ldots m$.

Gleichzeitig wird $y_{LEDi.j}$ für die Berechnung des Distanzquotienten $q_{LEDi.j}$ verwendet:

$$q_{LEDi.j} = \frac{y_{LEDi.j}\,(ADC1) - y_{LEDi.j}\,(ADC2)}{y_{LEDi.j}\,(ADC1) + y_{LEDi.j}\,(ADC2)} \text{ mit } j = 1 \ldots m.$$

Der Distanzquotient wird somit gebildet durch den Quotient der Differenz und Summe der Ausgangssignale, die jeweils auf den Signaloffset bezogen sind. Danach wird für $y_{LEDi.j}$ und $q_{LEDi.j}$ der Mittelwert gebildet:

$$\bar{y}_{LEDi.teach} = \frac{1}{m} \sum_{j=1}^{m} y_{LEDi.j}$$

$$\bar{q}_{LEDI.teach} = \frac{1}{m} \sum_{j=1}^{m} q_{LEDi.j}$$

Damit ist der Einlernvorgang abgeschlossen.

Im Betrieb des optischen Sensors 1 wird nun laufend für jeden Sender i zuerst $y_{LEDi.t}$ und dann daraus folgend die Energieabweichung $\Delta E_{LEDi.t}$ bzw. Distanzabweichung $\Delta D_{LEDi.t}$ bestimmt (unter Zuhilfenahme der während des Einlernvorgangs bestimmten Größen $\bar{y}_{LEDi.teach}$ und $\bar{q}_{LEDi.teach}$). Der Index i = {1,2,3} bezeichnet die einzelnen Sender i, der Index t steht für die Zeit. Für den aktuellen Zeitpunkt ist t = 0. Beim vorletzten Messpunkt ist dann t = -1, etc.

$$\Delta E_{LEDi.t} = \left| y_{LEDi.t} - \bar{y}_{LEDi.teach} \right|$$

$$\Delta Q_{LEDi.t} = \left| q_{LEDi.t} - \bar{q}_{LEDi.teach} \right|$$

Für den Sonderfall, dass bedingt durch Mehrfachspiegelungen der Lichtstrahlen "virtuelle Objekte" hinter dem Förderband 9 erscheinen, wird auf die Betragsbildung bei $\Delta Q_{LEDi.t}$ verzichtet.

Diese Werte werden nun noch einem gleitenden Mittelwertfilter der Größe n unterzogen. Zudem wird der Bezug zu den einzelnen Sendern 3a bis 3c aufgelöst, indem n größer als die Zahl der Sender 3a bis 3c gewählt wird.

$$\Delta \bar{E} = \frac{1}{n} \sum_{t=o}^{-(n-1)} \Delta E_{LEDi.t} \text{ mit } i = ([t + i_{t=0} - 1])\%3 + 1$$

$$\Delta \bar{Q} = \frac{1}{n} \sum_{t=o}^{-(n-1)} \Delta Q_{LEDi.t} \text{ mit } i = ([t + i_{t=0} - 1])\%3 + 1$$

Ist n = 8 und war bei t=0 gerade die LED i=1 an, so setzt sich $\Delta \bar{E}$ und $\Delta \bar{Q}$ wie folgt zusammen:

$$\Delta \bar{E} = \frac{1}{8} (\Delta E_{LED1.0} + \Delta E_{LED3.-1} + \Delta E_{LED2.-2} + \Delta E_{LED1.-3} + \Delta E_{LED3.-4} +$$
$$\Delta E_{LED2.-5} + \Delta E_{LED1.-6} + \Delta E_{LED3.-7})$$

$$\Delta \bar{Q} = \frac{1}{8} (\Delta Q_{LED1.0} + \Delta Q_{LED3.-1} + \Delta Q_{LED2.-2} + \Delta Q_{LED1.-3} + \Delta Q_{LED3.-4} +$$
$$\Delta Q_{LED2.-5} + \Delta Q_{LED1.-6} + \Delta Q_{LED3.-7})$$

Die Größen $\Delta \bar{E}$ und $\Delta \bar{Q}$ bilden die Koordinatenachsen eines zweidimensionalen Vektorraums, wie in Figur 3 dargestellt.

In diesem Vektorraum kann anhand von Messwerten während eines Einlernprozesses, bei welchem der optische Sensor 1 nur gegen das Förderband 9 misst, eine konvexe Hülle bestimmt werden. Im vorliegenden Fall wird als einfachste Näherung einer konvexen Hülle eine rechteckförmige Hülle $H_o$ als Parameter vorgegeben.

Durch Vorgabe von Streckungsfaktoren als weiteren Parametern wird ausgehend von der Hülle $H_o$ eine Einschalthülle Hi und eine Ausschalthülle $H_2$ gebildet.

Im nachfolgenden Betrieb des optischen Sensors 1 werden anhand der Ausgangssignale des ortsauflösenden Empfängers 4 Messpunkte in dem zweidimensionalen Vektorraum gebildet.

Liegen die Messwerte außerhalb der Einschalthülle Hi, gilt ein Objekt 8 als erkannt. Liegen die Messwerte innerhalb der Ausschalthülle $H_2$, so gilt das Förderband 9, das heißt der Hintergrund als erkannt. Dementsprechend nimmt das Schaltsignal einen entsprechenden Schaltzustand ein.

Die vorgenannte Auswertung kann dahingehend noch erweitert werden, dass bei der Berechnung von $\Delta E, \Delta Q$ wie nachstehend angeführt an folgenden Stellen weitere Faktoren/Gewichtungen a, b eingeführt werden. Diese Faktoren könnten zum Beispiel speziell auf eine Applikation abgestimmt werden.

$$\Delta E_{LEDi.t} = |a_{LEDi.t}\, y_{LEDi.t} - \bar{y}_{LEDi.teach}|$$

$$\Delta Q_{LEDi.t} = |b_{LEDi.t}\, q_{LEDi.t} - \bar{q}_{LEDi.teach}|$$

Die Werte für die gleitende Mittelwertbildung könnten individuell gewichtet werden, zum Beispiel abhängig vom aktuellen Wert oder der Historie der Messwerte.

$$\Delta\bar{E} = \frac{1}{n}\sum_{t=o}^{-(n-1)} c_{LEDi.t}\, \Delta E_{LEDi.t}\ \text{mit}\ i = i_t$$

$$\Delta\bar{Q} = \frac{1}{n}\sum_{t=o}^{-(n-1)} d_{LED.t}\, \Delta Q_{LEDi.t}\ \text{mit}\ i = i_t$$

Gemäß einer zweiten Variante der Erfindung erfolgt die Signalauswertung mit einem neuronalen Netz, insbesondere einem Convolutional Neural Network (CNN).

Aus den Rohmesspunkten xi

$$x_{LEDi} = \begin{bmatrix} ADC1 \\ ADC2 \end{bmatrix} \text{mit}\ i = 1 \dots 3$$

wird jeweils eine Sequenz i=1,2,3 aufgenommen und im Vektor $x_{CNN}$ abgelegt.

$$x_{CNN} = \begin{bmatrix} x_{LED1} \\ x_{LED2} \\ x_{LED3} \end{bmatrix}$$

Zum Training des CNN werden nun verschiedene Szenarien nachgebildet. Es werden verschiedene Hintergründe (sauber, verschmutzt) und verschiedene Objekte 8 mit dem optischen Sensor 1 aufgezeichnet. Die Daten werden exportiert und zum Training auf einen PC abgelegt. Dabei muss in einem weiteren Vektor o, zu jedem Rohmesspunkt $x_{CNN}$ noch vermerkt werden, ob nun ein Objekt 8 vorhanden ist/war (o = 1), oder der optische Sensor 1 auf den Hintergrund blickt/e (o = 0).

$$x_{CNN.Teach} = [x_{CNN.1}, x_{CNN.2}, x_{CNN.3}, \dots, x_{CNN.n}]$$

$$o_{Teach} = [o_1, o_2, o_3, ..., o_n]$$

Auf dem PC wird dann das Netz trainiert und gibt am Ende die optimalen Koeffizienten für das CNN aus. Diese werden dann wieder zurück in den optischen Sensor 1 geladen.

Im Betrieb des optischen Sensors 1 wird dann nur noch $x_{CNN}$ dem CNN zugeführt und der Ausgang liefert die Wahrscheinlichkeit für "Objekt vorhanden" beziehungsweise "kein Objekt vorhanden". Der Zustand mit der größeren Wahrscheinlichkeit wird dann als Schaltsignal ausgegeben.

Mit dieser "Grundparametrierung" wird der optische Sensor 1 an den Kunden ausgeliefert. Beim Betrieb beim Kunden könnten dann weiterhin Daten aufgezeichnet werden und über via IOL-Master etc. in eine Cloud geladen werden. Die Daten müssen nicht in Echtzeit übertragen werden. Die Daten könnten jeweils nur einen Ausschnitt enthalten. In der Cloud werden diese Ausschnitte über die Zeit das "Bild" der Applikation detaillieren. In der Cloud werden die Daten dann analysiert und das Netz weiter trainiert. Der optische Sensor 1 kann von Zeit zu Zeit dem Master über ein Prozessdatenbit oder ein Event signalisieren, dass der Master über die SPS oder den OPC Server nach neuen Daten schauen soll. Der Master kann dann die neuen Daten wieder an den optischen Sensor weiterleiten. Dadurch ist eine Aktualisierung von Parametersätzen möglich.

Bezugszeichenliste

| | |
|---|---|
| (1) | Optischer Sensor |
| (2) | Gehäuse |
| (3) | Sendereinheit |
| (3a - c) | Sender |
| (4) | Empfänger |
| (5) | Leiterplatte |
| (6) | Sendeoptik |
| (7) | Empfangsoptik |
| (8) | Objekt |
| (9) | Förderband |
| (10) | Lichtstrahl |
| (11) | Feldblende |

| | |
|---|---|
| $H_o$ | Hülle, rechteckförmig |
| Hi | Einschalthülle |
| $H_2$ | Ausschalthülle |

**Patentansprüche**

**1.** Optischer Sensor (1) mit mehreren Lichtstrahlen (10) emittierenden Sendern (3a - c), welche jeweils zyklisch einzeln aktiviert sind und mit einem ortsauflösenden Empfänger (4), welcher zwei Anschlüsse aufweist, über welche jeweils ein analoges Ausgangssignal ausgebbar ist, wobei jeder Sender (3a - c) mit dem ortsauflösenden Empfänger (4) einen Triangulationstaster bildet, und wobei eine Auswerteeinheit vorgesehen ist, in welcher in Abhängigkeit der Ausgangssignale des ortsauflösenden Empfängers (4) ein Schaltsignal generiert wird, dessen Schaltzustände angeben, ob ein Objekt (8) vor einem Hintergrund vorhanden ist oder nicht und wobei die Sender (3a - c) entlang einer parallel zur Längsachse des ortsauflösenden Empfängers (4) verlaufenden Geraden angeordnet sind, **dadurch gekennzeichnet, dass** die Ausgangssignale des ortsauflösenden Empfängers (4) über wenigstens einen Analog-Digital-Wandler der Auswerteeinheit zugeführt sind, und dass für den Fall, dass beide Ausgangssignale innerhalb vorgegebener Grenzen einem Signaloffset des Analog-Digital-Wandlers entsprechen, das Schaltsignal den ein Objekt (8) signalisierenden Schaltzustand einnimmt, und dass der Signaloffset vor jeder Messung bestimmt wird.

**2.** Optischer Sensor (1) nach Anspruch 1, **dadurch gekennzeichnet, dass** den Sendern (3a - c) eine Feldblende (11) oder eine Feldblende (11) und eine Aperturblende zugeordnet ist.

**3.** Optischer Sensor (1) nach einem der Ansprüche 1 oder 2, **dadurch gekennzeichnet, dass** das Schaltsignal nur dann den ein Objekt (8) signalisierenden Schaltzustand einnimmt, wenn die hierzu ermittelten Abstände kleiner sind als ein für den Hintergrund vorgegebener Abstandswert oder bei Nichtvorhandensein eines eingelernten Hintergrundsignals für einen der Sender (3a - c).

4. Optischer Sensor (1) nach einem der Ansprüche 1 bis 3, **dadurch gekennzeichnet, dass** zur Generierung des Schaltsignals rollierend die mit den Sendern (3a - c) generierten Ausgangssignale herangezogen sind.

5. Optischer Sensor (1) nach einem der Ansprüche 1 bis 4, **dadurch gekennzeichnet, dass** zur Generierung des Schaltsignals die Ausgangssignale mit mehreren eine Schalthysterese bildenden Distanz-Schaltschwellenwerten bewertet werden.

6. Optischer Sensor (1) nach Anspruch 5, **dadurch gekennzeichnet, dass** die Schalthysterese abhängig von Energieabweichungen der Ausgangssignale verändert wird.

7. Optischer Sensor (1) nach einem der Ansprüche 5 oder 6, **dadurch gekennzeichnet, dass** eine Nachführung der Sendeleistungen der Sender (3a - c) derart vorgesehen ist, dass keine Sättigung der Ausgangssignale auftritt.

8. Optischer Sensor (1) nach einem der Ansprüche 1 bis 7, **dadurch gekennzeichnet, dass** in der Auswerteeinheit aus den Ausgangssignalen der Triangulationstaster Energieabweichungen, definiert durch Differenzen der Ausgangsignale und Offsetwerten, sowie Distanzquotienten, definiert durch Quotienten der Differenzen und Summen der beiden Ausgangssignale des ortsauflösenden Empfängers (4), gebildet werden, dass die Summen der Energieabweichungen und der Distanzquotienten für eine zur Objektdetektion herangezogene Anzahl von Sendern (3a - c) gebildet werden, wobei diese Summen die Koordinatenachsen eines Vektorraums bilden, dass in einem Einlernvorgang der Hintergrund alleine mit den Triangulationstastern mehrfach vermessen wird und für die dabei erhaltenen Messwerte durch Berechnung der Quotientensumme und Differenzsumme jeweils Messpunkte im Vektorraum erhalten und für diese eine konvexe Hülle gebildet wird, und dass während eines auf den Einlernvorgang folgenden Arbeitsbetriebs ein Objekt (8) vor dem Hintergrund dadurch erkannt ist, dass dessen Messpunkte außerhalb der konvexen Hülle liegen.

9. Optischer Sensor (1) nach Anspruch 8, **dadurch gekennzeichnet, dass** die konvexe Hülle als Parameterwert vorgegeben wird.

10. Optischer Sensor (1) nach Anspruch 9, **dadurch gekennzeichnet, dass** die konvexe Hülle eine Rechteckform aufweist.

11. Optischer Sensor (1) nach Anspruch 8, **dadurch gekennzeichnet, dass** während des Einlernvorgangs mit zunehmender Anzahl von Messpunkten die konvexe Hülle iterativ bestimmt wird.

12. Optischer Sensor (1) nach einem der Ansprüche 8 bis 11, **dadurch gekennzeichnet, dass** durch Streckung der konvexen Hülle mit einem ersten Streckungsfaktor eine Ausschalthülle ($H_2$) gebildet ist, und dass durch Streckung der konvexen Hülle mit einem zweiten Streckungsfaktor, der größer ist als der erste Streckungsfaktor, eine Einschalthülle ($H_1$) gebildet ist, wobei bei innerhalb der Ausschalthülle ($H_2$) liegenden Messpunkten der Hintergrund als erkannt gilt und bei außerhalb der Einschalthülle ($H_1$) liegenden Messpunkten ein Objekt (8) vor dem Hintergrund als erkannt gilt.

13. Optischer Sensor (1) nach Anspruch 12, **dadurch gekennzeichnet, dass** die Streckungsfaktoren als Parameterwerte vorgegeben sind.

14. Optischer Sensor (1) nach Anspruch 1 bis 7, **dadurch gekennzeichnet, dass** die Auswertung der Ausgangssignale des ortsauflösenden Empfängers (4) mittels eines neuronalen Netzes erfolgt.

15. Optischer Sensor (1) nach einem der Ansprüche 1 bis 14, **dadurch gekennzeichnet, dass** der ortsauflösende Empfänger (4) von einem PSD-Element gebildet ist.

16. Optischer Sensor (1) nach einem der Ansprüche 1 bis 15, **dadurch gekennzeichnet, dass** die Sender (3a - c) Sendelichtimpulse emittieren.

17. Optischer Sensor (1) nach einem der Ansprüche 1 bis 16, **dadurch gekennzeichnet, dass** mit diesem Objekte (8) detektiert werden, die auf einem Förderband (9) gefördert werden, wobei das Förderband (9) den Hintergrund bildet.

18. Verfahren zum Betrieb eines optischen Sensors (1) mit mehreren Lichtstrahlen (10) emittierenden Sendern (3a - c), welche jeweils zyklisch einzeln aktiviert sind und mit einem ortsauflösenden Empfänger (4), welcher zwei Anschlüsse aufweist, über welche jeweils ein analoges Ausgangssignal ausgebbar ist, wobei jeder Sender (3a - c) mit dem ortsauflösenden Empfänger (4) einen Triangulationstaster bildet, und wobei eine Auswerteeinheit vorgesehen ist, in welcher in Abhängigkeit der Ausgangssignale des ortauflösenden Empfängers (4) ein Schaltsignal generiert wird, dessen Schaltzustände angeben, ob ein Objekt (8) vor einem Hintergrund vorhanden ist oder nicht, und wobei die Sender (3a - c) entlang einer parallel zur Längsachse des ortsauflösenden Empfängers (4) verlaufenden Geraden angeordnet sind, **dadurch gekennzeichnet, dass** die Ausgangssignale des ortsauflösenden Empfängers (4) über wenigstens einen Analog-Digital-Wandler der Auswerteeinheit zugeführt sind, und dass für den Fall, dass beide Ausgangssignale innerhalb vorgegebener Grenzen einem Signaloffset des Analog-Digital-Wandlers entsprechen, das Schaltsignal den ein Objekt (8) signalisierenden Schaltzustand einnimmt, und dass der Signaloffset vor jeder Messung bestimmt wird.

## Claims

1. An optical sensor (1) having a plurality of transmitters (3a - c) which emit light beams (10) and are each cyclically activated individually, and having a position-resolving receiver (4) which has two connections via each of which an analogue output signal can be output, wherein each transmitter (3a - c) forms a triangulation sensor with the location-resolving receiver (4), and wherein an evaluation unit is provided in which a switching signal is generated in dependence on the output signals of the location-resolving receiver (4), the switching states of which switching signal indicate whether an object (8) is in front of an object detector, whether or not an object (8) is present in front of a background and in which the transmitters (3a - c) are arranged along a straight line running parallel to the longitudinal axis of the location-resolving receiver (4), **characterised in that** the output signals of the location-resolving receiver (4) are fed to the evaluation unit via at least one analogue-to-digital converter, and **in that**, in the event that both output signals correspond within predetermined limits to a signal offset of the analogue-to-digital converter, the switching signal assumes the switching state signalling an object (8), and **in that** the signal offset is determined before each measurement.

2. An optical sensor (1) according to claim 1, **characterised in that** a field diaphragm (11) or a field diaphragm (11) and an aperture diaphragm are associated with the transmitters (3a-c).

3. An optical sensor (1) according to one of claims 1 or 2, **characterised in that** the switching signal only assumes the switching state signalling an object (8) if the distances determined for this purpose are smaller than a distance value predetermined for the background or in the absence of a taught-in background signal for one of the transmitters (3a - c).

4. An optical sensor (1) according to one of the claims 1 to 3, **characterised in that** the output signals generated with the transmitters (3a - c) are used in a rolling manner to generate the switching signal.

5. An optical sensor (1) according to one of the claims 1 to 4, **characterised in that** the output signals are evaluated with several distance switching threshold values forming a switching hysteresis in order to generate the switching signal.

6. An optical sensor (1) according to claim 5, **characterised in that** the switching hysteresis is changed depending on energy deviations of the output signals.

7. An optical sensor (1) according to one of the claims 5 or 6, **characterised in that** a tracking of the transmitting powers of the transmitters (3a - c) is provided in such a way that no saturation of the output signals occurs.

8. An optical sensor (1) according to one of claims 1 to 7, **characterised in that** energy deviations, defined by differences of the output signals and offset values, and distance quotients, defined by quotients of the differences of the output signals and offset values, are calculated in the evaluation unit from the output signals of the triangulation sensors, defined by quotients of the differences and sums of the two output signals of the position-resolving receiver (4), **in that** the sums of the energy deviations and the distance quotients are formed for a number of transmitters (3a - c) used for object detection, wherein these sums form the coordinate axes of a vector space, **in that** in a teach-in process the background alone is measured several times with the triangulation probes and measurement points in the vector space are obtained in each case for the measurement values obtained in this process by calculation of the quotient sum and difference sum and a convex envelope is formed for these, and **in that** during an operating mode following the teach-in process an object (8) is detected in front of the background **in that** its measurement points lie outside the convex envelope.

9. An optical sensor (1) according to claim 8, **characterised in that** the convex envelope is specified as a parameter value.

10. An optical sensor (1) according to claim 9, **characterised in that** the convex envelope has a rectangular shape.

11. An optical sensor (1) according to claim 8, **characterised in that** during the teach-in process the convex envelope is determined iteratively with an increasing number of measuring points.

12. An optical sensor (1) according to any one of claims 8 to 11, **characterised in that** an off envelope ($H_2$) is formed by stretching the convex envelope with a first stretching factor, and **in that** an off envelope ($H_2$) is formed by stretching the convex envelope with a second stretching factor, which is greater than the first stretching factor, a switch-on envelope ($H_1$) is formed, in which case, in the case of measurement points lying within the switch-off envelope ($H_2$), the background is regarded as being detected and, in the case of measurement points lying outside the switch-on envelope ($H_1$), an object (8) in front of the background is regarded as being detected.

13. An optical sensor (1) according to claim 12, **characterised in that** the stretching factors are predetermined as parameter values.

14. An optical sensor (1) according to claim 1 to 7, **characterised in that** the evaluation of the output signals of the location-resolving receiver (4) is carried out by means of a neural network.

15. An optical sensor (1) according to one of claims 1 to 14, **characterised in that** the location-resolving receiver (4) is formed by a PSD element.

16. An optical sensor (1) according to one of claims 1 to 15, **characterised in that** the transmitters (3a - c) emit transmitted light pulses.

17. An optical sensor (1) according to one of claims 1 to 16, **characterised in that** it is used to detect objects (8) which are conveyed on a conveyor belt (9), the conveyor belt (9) forming the background.

18. A method for operating an optical sensor (1) with several transmitters (3a - c) emitting light beams (10), each of which is cyclically activated individually, and with a location-resolving receiver (4) which has two connections via each of which an analogue output signal can be output, wherein each transmitter (3a - c) forms a triangulation sensor with the location-resolving receiver (4), and wherein an evaluation unit is provided in which a switching signal is generated in dependence on the output signals of the location-resolving receiver (4), the switching states of which signals indicate whether an object (8) is in front of an object detector, whether or not an object (8) is present in front of a background, and the transmitters (3a - c) being arranged along a straight line running parallel to the longitudinal axis of the location-resolving receiver (4), **characterized in that** the output signals of the location-resolving receiver (4) are fed to the evaluation unit via at least one analogue-to-digital converter, and **in that**, in the event that both output signals correspond within predetermined limits to a signal offset of the analogue-to-digital converter, the switching signal assumes the switching state signalling an object (8), and **in that** the signal offset is determined before each measurement.

**Revendications**

1. Capteur optique (1) comportant plusieurs émetteurs (3a - c) émettant des faisceaux lumineux (10) et activés individuellement de manière cyclique, ainsi qu'un récepteur à résolution de position (4) doté de deux connexions par lesquelles un signal de sortie analogique peut être émis, dans lequel chaque émetteur (3a - c) forme un capteur de triangulation avec le récepteur à résolution de position (4), et dans lequel une unité d'évaluation est prévue, dans laquelle un signal de commutation est généré en fonction des signaux de sortie du récepteur à résolution d'emplacement (4), les états de commutation de ce signal de commutation indiquant si un objet (8) se trouve devant un détecteur d'objets, si un objet (8) est présent ou non devant un arrière-plan et dans lequel les émetteurs (3a - c) sont disposés le long d'une ligne droite parallèle à l'axe longitudinal du récepteur à résolution d'emplacement (4), **caractérisé par le fait que** les signaux de sortie du récepteur à résolution d'emplacement (4) sont transmis à l'unité d'évaluation par l'intermédiaire d'au moins un convertisseur analogique-numérique, et en ce que, si les deux signaux de sortie correspondent dans des limites prédéterminées à un décalage de signal du convertisseur analogique-numérique, le signal de commutation prend l'état de commutation signalant un objet (8), et en ce que le décalage de signal est déterminé avant chaque mesure.

2. Capteur optique (1) selon la revendication 1, **caractérisé en ce qu'**un diaphragme de champ (11) ou un diaphragme de champ (11) et un diaphragme d'ouverture sont associés aux émetteurs (3a - c).

3. Capteur optique (1) selon l'une des revendications 1 ou 2, **caractérisé en ce que** le signal de commutation ne prend l'état de commutation signalant un objet (8) que si les distances déterminées à cet effet sont inférieures à une valeur de distance prédéterminée pour l'arrière-plan ou en l'absence d'un signal d'arrière-plan appris pour l'un des émetteurs (3a - c).

4. Capteur optique (1) selon l'une des revendications 1 à 3, **caractérisé par le fait que** les signaux de sortie générés par les émetteurs (3a - c) sont utilisés de manière roulante pour générer le signal de commutation.

5. Capteur optique (1) selon l'une des revendications 1 à 4, **caractérisé par le fait que** les signaux de sortie sont évalués avec plusieurs valeurs de seuil de commutation de distance formant une hystérésis de commutation afin de générer le signal de commutation.

6. Capteur optique (1) selon la revendication 5, **caractérisé en ce que** l'hystérésis de commutation est modifiée en fonction des écarts d'énergie des signaux de sortie.

7. Capteur optique (1) selon l'une des revendications 5 ou 6, **caractérisé par le fait que** le suivi des puissances d'émission des émetteurs (3a - c) est assuré de manière à éviter toute saturation des signaux de sortie.

8. Capteur optique (1) selon l'une des revendications 1 à 7, **caractérisé par le fait que** les écarts d'énergie, définis par les différences des signaux de sortie et les valeurs de décalage, et les quotients de distance, définis par les quotients des différences des signaux de sortie et les valeurs de décalage, sont calculés dans l'unité d'évaluation à partir des signaux de sortie des capteurs de triangulation, définis par les quotients des différences et les sommes des deux signaux de sortie du récepteur à résolution de position (4), en ce que les sommes des écarts d'énergie et les quotients de distance sont formés pour un certain nombre d'émetteurs (3a - c) utilisés pour la détection de l'objet, dans lequel ces sommes forment les axes de coordonnées d'un espace vectoriel, dans lequel, dans un processus d'apprentissage, l'arrière-plan seul est mesuré plusieurs fois avec les sondes de triangulation et des points de mesure dans l'espace vectoriel sont obtenus dans chaque cas pour les valeurs de mesure obtenues dans ce processus par le calcul de la somme des quotients et de la somme des différences et une enveloppe convexe est formée pour ceux-ci, et dans lequel, dans un mode de fonctionnement suivant le processus d'apprentissage, un objet (8) est détecté devant l'arrière-plan dans la mesure où ses points de mesure se situent à l'extérieur de l'enveloppe convexe.

9. Capteur optique (1) selon la revendication 8, **caractérisé par le fait que** l'enveloppe convexe est spécifiée en tant que valeur de paramètre.

10. Capteur optique (1) selon la revendication 9, **caractérisé en ce que** l'enveloppe convexe a une forme rectangulaire.

11. Capteur optique (1) selon la revendication 8, **caractérisé en ce que**, pendant le processus d'apprentissage, l'enveloppe convexe est déterminée de manière itérative avec un nombre croissant de points de mesure.

12. Capteur optique (1) selon l'une quelconque des revendications 8 à 11, **caractérisé en ce qu'**une enveloppe d'arrêt $(H_2)$ est formée en étirant l'enveloppe convexe avec un premier facteur d'étirement, et **en ce qu'**une enveloppe d'arrêt $(H_2)$ est formée en étirant l'enveloppe convexe avec un second facteur d'étirement, qui est plus grand que le premier facteur d'étirement, une enveloppe d'activation $(H_1)$ est formée, dans laquelle, dans le cas des points de mesure situés à l'intérieur de l'enveloppe d'activation $(H_2)$, l'arrière-plan est considéré comme étant détecté et, dans le cas des points de mesure situés à l'extérieur de l'enveloppe d'activation $(H_1)$, un objet (8) situé devant l'arrière-plan est considéré comme étant détecté.

13. Capteur optique (1) selon la revendication 12, **caractérisé par le fait que** les facteurs d'étirement sont prédéterminés en tant que valeurs de paramètres.

14. Capteur optique (1) selon les revendications 1 à 7, **caractérisé par le fait que** l'évaluation des signaux de sortie du récepteur à résolution de position (4) est effectuée au moyen d'un réseau neuronal.

15. Capteur optique (1) selon l'une des revendications 1 à 14, **caractérisé par le fait que** le récepteur à résolution de position (4) est formé par un élément PSD.

16. Capteur optique (1) selon l'une des revendications 1 à 15, **caractérisé par le fait que** les émetteurs (3a - c) émettent des impulsions lumineuses transmises.

17. Capteur optique (1) selon l'une des revendications 1 à 16, **caractérisé en ce qu'**il est utilisé pour détecter des objets (8) transportés sur une bande transporteuse (9), la bande transporteuse (9) constituant l'arrière-plan.

18. Procédé de fonctionnement d'un capteur optique (1) comportant plusieurs émetteurs (3a - c) émettant des faisceaux lumineux (10), dont chacun est activé individuellement de manière cyclique, et un récepteur de localisation (4) comportant deux connexions par l'intermédiaire desquelles un signal de sortie analogique peut être émis, dans lequel chaque émetteur (3a - c) forme un capteur de triangulation avec le récepteur à résolution d'emplacement (4), et dans lequel une unité d'évaluation est prévue dans laquelle un signal de commutation est généré en fonction des signaux de sortie du récepteur à résolution d'emplacement (4), les états de commutation de ces signaux indiquant si un objet (8) se trouve devant un détecteur d'objets, si un objet (8) est présent ou non devant un arrière-plan, et les émetteurs (3a - c) sont disposés le long d'une ligne droite parallèle à l'axe longitudinal du récepteur à résolution d'emplacement (4), **caractérisé par le fait que** les signaux de sortie du récepteur à résolution d'emplacement (4) sont transmis à l'unité d'évaluation via au moins un convertisseur analogique-numérique, et en ce que, si les deux signaux de sortie correspondent dans des limites prédéterminées à un décalage de signal du convertisseur analogique-numérique, le signal de commutation prend l'état de commutation signalant un objet (8), et en ce que le décalage de signal est déterminé avant chaque mesure.

**Fig. 1**

EP 3 862 778 B1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20118145 U1
- EP 2348331 A1
- EP 3572768 A1
- EP 3441795 A1